# EUROPEAN PATENT SPECIFICATION

(11) **EP 3 546 166 B1**
(45) Date of publication and mention of the grant of the patent: **26.05.2021**
(21) Application number: 19165722.0
(22) Date of filing: 28.03.2019
(51) Int. Cl.: B29B 11/16, B29B 15/10

(54) **STABILIZING A DEFORMABLE FABRIC**
STABILISIERUNG EINES VERFORMBAREN GEWEBES
STABILISATION D'UN TISSU DÉFORMABLE

(30) Priority: 28.03.2018 US 201815932631
(43) Date of publication of application: 02.10.2019
(73) Proprietor: Spunfab, Ltd., Cuyahoga Falls, OH 44223 (US)
(72) Inventor: KEUCHEL, Kenneth, Cuyahoga Falls, Ohio 44223 (US)
(74) Representative: Schweitzer, Klaus

(56) References cited:
- EP-A1- 2 716 435
- WO-A1-2007/041782
- JP-A- 2002 096 413
- JP-A- 2002 113 802

## Description

### BACKGROUND OF THE INVENTION

### Field of the Invention

This invention relates to stabilized textile fabrics commonly used in industrial applications, such as ballistic vests. The invention also relates to their method of manufacture.

### Description of the Related Art

The stabilization of textile fabrics has been a problem for many years. In United Kingdom Patent Specification 545,770 accepted 11 June 1942, a process for stabilizing the dimensions of a textile fabric is disclosed. The process comprises providing a textile fabric containing potentially adhesive fibers which are produced by mixing together, prior to spinning, at least one type of thermoplastic fibers having an inherent tackiness upon heating and textile fibers. Upon heating, the thermoplastic fibers are substantially permanently adhered to the textile fibers in the fabric thereby providing dimensional stability.

In United Kingdom Patent Specification 1,420,517 accepted 7 January 1976, a process for stabilizing woven textile structures is disclosed. The process comprises providing tapes formed from multicomponent films having a component with a relatively low softening temperature. Such tapes are woven into a textile structure prior to stabilizing such textile structure. The stabilization of the textile structure is accomplished by heating the textile structure to a temperature between the softening and melting temperatures of the low softening temperature component so that this component bonds to the textile structure thereby providing dimensional stability.

In United States Patent 5,691,030 issued 25 November 1997, a process is disclosed for producing stabilized fabrics and reinforced products containing such fabrics. A bonded fabric is provided that comprises a mesh of filaments of the core-sheath type bonded together at the crossing points of the filaments. One method by which reinforcement may be provided is to spin, core-texture, envelope or twist around a yarn such as glass, aramid or carbon, another yarn with a lower melting point than the main reinforcement yarn and to make a composite by applying heat and pressure to bond the lower melting yarn to the reinforcement yarn.

WO 2007/041782 A1 discloses a process for producing a reinforcing fiber preform or fabric using the combination of a thermoplastic polymer binder and a thermosetting polymer. The thermoplastic polymer is chosen for its solution compatibility with the thermosetting polymer.

EP 2 716 435 A1 discloses a method for producing a semi-finished material by combining a higher-melting reinforcement material with lower melting fibers of a lower-melting thermoplastic resin.

JP 200296413 and JP 2002113802 both disclose a composite reinforced fiber base material produced by laminating a woven fabric formed from reinforcing fibers and a nonwoven fabric of which thermoplastic fibers are oriented in one direction.

### BRIEF SUMMARY OF THE INVENTION

A process is provided for producing a stable fabric designed for the production of shaped articles comprising: 1) providing a first fabric formed from braided reinforcing fibers, 2) providing a nonwoven web produced from thermoplastic fibers, having s softening temperature lower than said reinforcing fibers, on at least one side of said first fabric to form a structure, 3) heating said structure to a temperature between the softening temperature and melting temperature of said nonwoven web, and 4) cooling said structure to thereby provide a stable two-dimensional fabric. The structure of step 2) is put into a mold prior to heating step 3), heating said structure in the mold according to step 3), cooling said structure in the mold according to step 4) and thereby providing a three-dimensional shaped article. A product is provided produced by these processes. Alternatively, the nonwoven web may be formed directly on the surface of the reinforcing fibrous fabric.

### BRIEF DESCRIPTION OF THE DRAWINGS

FIGURE I is a photograph of an A&P TX carbon braid fiber flat fibrous substrate coated on one side with a Spunfab Polyolefin P04208 nonwoven web. FIGURE II is a photograph of an A&P TX carbon fiber braid flat fibrous substrate coated on one side with a Spunfab Polyamide PA1203 nonwoven web. FIGURE III is a photograph of a A&P aramid braid flat fibrous substrate coated on one side with a Spunfab Polyolefin PO4208 nonwoven web. FIGURE IV is a photograph of a A&P aramid flat fibrous substrate coated on one side with a Spunfab Polyamide PA203 nonwoven web. The production of the substrates depicted in FIGURES I to IV are described in EXAMPLE 1 below.

### DETAILED DESCRIPTION OF THE INVENTION

Molding a three-dimensional shape from a high modulus fabric formed from fibers, such as ceramic, poly-alpha aramid or carbon fibers, is especially difficult. The usual result is a distorted material with large gaps in the fabric, especially if the fabric is made from a twill or braided fibrous material. Stabilizing the high modulus fabric with a nonwoven web helps to significantly stabilize the high modulus reinforcing fibrous fabric for better handling, by enabling the fabric to be deformed without losing its integrity. This provides the ability to form three-dimensional shapes or to maintain a stable fabric alignment for non-three-dimensional shapes. This also enables the production of a stable +/- forty five degree fabric utilizing an elastic nonwoven web. Without the stabilizing nonwoven web, when the three-dimensional shaped material is stressed or pulled in the machine direction or the transverse direction the material is frequently distorted in that direction while remaining substantially intact. Current production of +/- 45° un-stabilized braid is typically shipped with a carrier to maintain width and stability.

The nonwoven web is formed from thermoplastic fibers having a lower softening temperature lower than the softening temperature of the reinforcing fibers. The thermoplastic fiber is preferably a polyamide or a polyolefin, such as polyethylene or polypropylene, and may be an elastic fiber, which may facilitate the molding process. Other preferred thermoplastic fibers are: co-polyolefins, polyurethanes, co-polyesters, polyether block amides such as Pebax®, polyester elastomers such as Hytrel®, styrene-ethylenebutylene-styrene polymers, styrene-butadiene-styrene polymers, polyetherketoneketone polymers, polyphenylene sulfide polymers and polyether ether ketone polymers.

The reinforcing fibers are preferably selected from the group consisting of carbon fibers, ceramic fibers, poly alpha-aramid fibers, elastic polyurethane fibers such as Lycra®, polyester fibers, polyamide fibers such as nylon, polypropylene, ultra-high molecular weight polyethylene, melt spun liquid crystal polymer fibers such as Vectran®, and polyvinyl alcohol fibers such as Kuralon®. The subject process may also be used to produce sporting goods, if the reinforcing fibrous fabric were a tubular braided Lycra fiber with the nonwoven web on one side. This product could be molded to the female form, then used for sportswear or a fashion fabric. The nonwoven web can be formed directly on the surface of the reinforcing fibrous fabric.

### EXAMPLE I

About 3 square yards of a substrate of A&P Aramid braid fibers and of A&P TX-45 braided carbon fibers were coated on one side with nonwoven webs of either Spunfab co-Polyamide PA1203 (6 grams per square meter) or Spunfab Polyolefin P04208 (6 grams per square meter). The coated Aramid substrates were cut into 4 inch by 4 inch squares. The coated carbon fiber substrates were cut into 4.5 inch circles. Each of these substrates were placed on a rectangular tray and placed, for 30-40 seconds, in an oven preheated to about 280 Degrees F.

### EXAMPLE II

Each of the substrates of EXAMPLE I, prior to the heating step, were put into a stainless steel one half sphere aluminum mold having a radius of about 1.5 inch and then placed in an oven heated to 300 degrees F, for 30-40 seconds. The mold containing the heated fabric and allowed to cool under 4 oz of pressure, to about 160 degrees F and the mold was opened and the stabilized fabric was removed. The three-dimensional shape of the stabilized fabric was retained and the dimensions of the fabric were substantially retained.

### EXAMPLE III

Each of the substrates of EXAMPLE I, after the heating step, were placed in a one half sphere stainless steel mold having a radius of about 1.5 inch. The mold containing the previously heated substrates were placed on a metal tray in the oven maintained at 300 degrees F, for an additional 10 seconds. The molds were removed from the oven and allowed to cool at atmospheric pressure. The shaped structures were removed from the molds and retained the shape of the molds.

This process is particularly applicable to shaped articles formed from braided high modules yarns such as a ceramic, carbon or KEVLAR® poly alpha-aramid fibers, available from Dupont, Such stabilized fabrics can be used for ballistic vests, in three-dimensional form or in two-dimensional form. When carbon fibers are utilized the three-dimensional shaped articles find uses as automotive transmission housings, automotive seat back panels and other shaped articles, such as female breast support and sportswear.

When applying or initially forming a nonwoven web on the surface of the fabric to be stabilized, an elastic or non-elastic nonwoven web can be used to produce substantially flat stabilized materials. The flat material can then be heated to a temperature between the softening temperature and the melting temperature of the nonwoven web and then placed in a mold to form a shaped article. The nonwoven web positioned on the surface of the fabric to be stabilized can be: elastic or non-elastic, continuous or discontinuous, a single or multi-layered fabric.

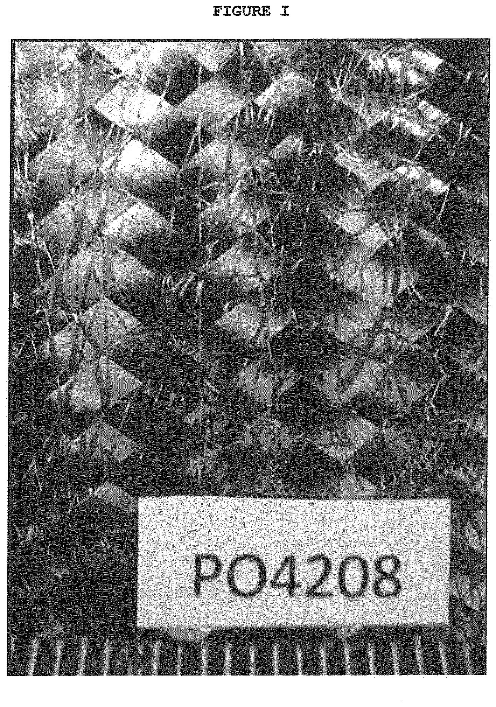

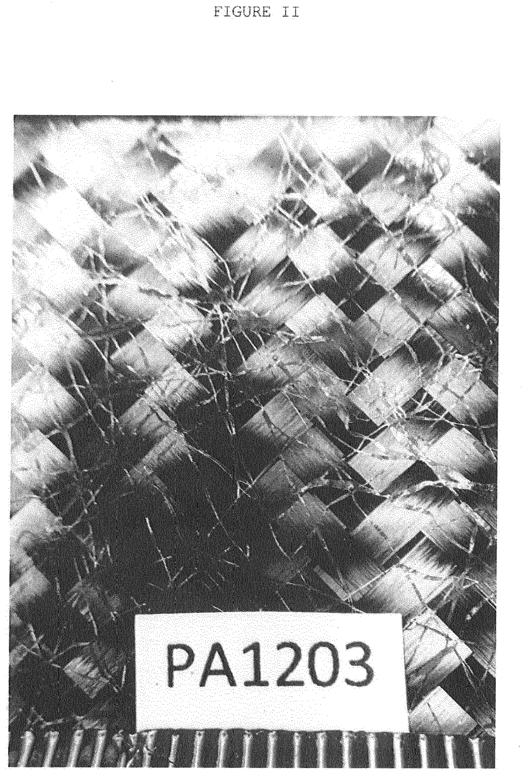

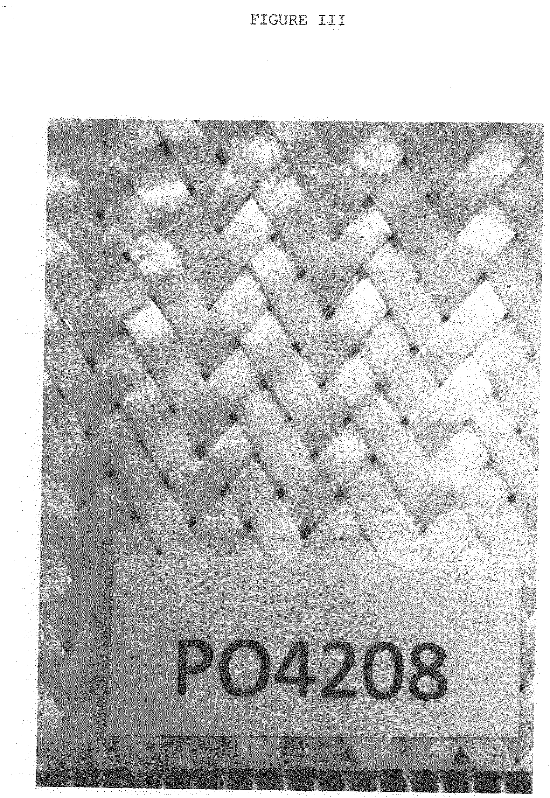

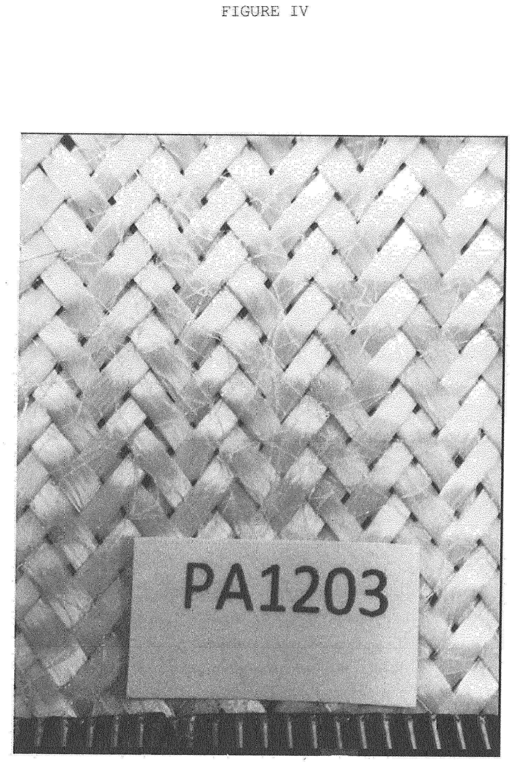

## Claims

1. A process for producing a stable three-dimensional fabric comprising : 1) providing a first fabric formed from braided reinforcing fibers, 2) providing at least one nonwoven web formed from thermoplastic fibers, having a softening point lower than said reinforcing fibers, on at least one side of said first fabric to form a structure, 3) placing said structure of step 2 in a mold, 4) heating said structure in said mold to a temperature between the softening temperature and melting temperature of said nonwoven web, and 5) cooling said structure in said mold, 6) removing said structure from said mold to thereby provide a stable three-dimensional fabric.

2. The process of claim 1 wherein the thermoplastic fiber is a polyamide or co-polyamide.

3. The process of claim 1 wherein the reinforcing fibers are selected from the group consisting of carbon fibers, ceramic fibers and poly alpha-aramid fibers.

4. The process of claim 1 wherein the thermoplastic fiber is a polyolefin or co-polyolefin, polyurethane, polyester, or co-polyester.

5. The product of the process of claim 1.

## Patentansprüche

1. Verfahren zur Herstellung eines stabilen dreidimensionalen Gewebes, das Folgendes umfasst: 1) Bereitstellen von einem aus geflochtenen Verstärkungsfasern gebildeten ersten Gewebe, 2) Bereitstellen von mindestens einem Vlies, das aus Thermoplastfasern mit einem Erweichungspunkt unter dem der Verstärkungsfasern gebildet ist, auf mindestens einer Seite des ersten Gewebes zur Bildung einer Struktur, 3) Platzieren der Struktur aus Schritt 2 in eine Form, 4) Erhitzen der Struktur in der Form auf eine Temperatur zwischen der Erweichungstemperatur und der Schmelztemperatur des Vlies und 5) Abkühlen der Struktur in der Form, 6) Entfernen der Struktur aus der Form, um so ein stabiles dreidimensionales Gewebe bereitzustellen.

2. Verfahren nach Anspruch 1, wobei es sich bei der Thermoplastfaser um ein Polyamid oder ein Co-Polyamid handelt.

3. Verfahren nach Anspruch 1, wobei die Verstärkungsfasern aus der Gruppe bestehend aus Kohlefasern, Keramikfasern und Poly-alpha-aramidfasern ausgewählt sind.

4. Verfahren nach Anspruch 1, wobei es sich bei der Thermoplastfaser um ein Polyolefin oder ein Co-Polyolefin, Polyurethan, Polyester oder Co-Polyester handelt.

5. Produkt aus dem Verfahren nach Anspruch 1.

## Revendications

1. Procédé de production d'un tissu tridimensionnel stable comprenant les étapes consistant à : 1) fournir un premier tissu formé de fibres de renforcement tressées, 2) fournir au moins une bande non tissée formée de fibres thermoplastiques, ayant un point de ramollissement inférieur à celui desdites fibres de renforcement, sur au moins un côté dudit premier tissu pour former une structure, 3) placer ladite structure de l'étape 2 dans un moule, 4) chauffer ladite structure dans ledit moule à une température comprise entre la température de ramollissement et la température de fusion de ladite bande non tissée, et 5) refroidir ladite structure dans ledit moule, 6) retirer ladite structure dudit moule pour fournir ainsi un tissu tridimensionnel stable.

2. Procédé selon la revendication 1, dans lequel la fibre thermoplastique est un polyamide ou un copolyamide.

3. Procédé selon la revendication 1, dans lequel les fibres de renforcement sont choisies dans le groupe constitué de fibres de carbone, fibres céramiques et fibres de polyalpha-aramide,

4. Procédé selon la revendication 1, dans lequel la fibre thermoplastique est une polyoléfine ou une copolyoléfine, un polyuréthane, un polyester ou un copolyester.

5. Produit du procédé selon la revendication 1.
